# EUROPEAN PATENT APPLICATION

(11) **EP 4 435 029 A1**
(43) Date of publication of application: **25.09.2024**
(21) Application number: 23163907.1
(22) Date of filing: 24.03.2023
(51) Int. Cl.: C08G 18/08, C08G 18/10, C08G 18/28, C08G 18/32, C08G 18/34, C08G 18/42, C08G 18/44, C08G 18/66, C08G 18/72, C08G 18/73, C08G 18/75, C09D 175/06

(54) **A TRANSPARENT PUD AND ITS APPLICATION**

(71) Applicant: Covestro Deutschland AG, 51373 Leverkusen (DE)
(72) Inventor: ZHU, Yingdan, Shanghai, 201210 (CN); WEIKARD, Jan, 51375 Leverkusen (DE); HU, Yi, Shanghai, 201206 (CN); ZHU, Deyong, Shanghai, 200237 (CN); XU, Fei, Suzhou, Jiangsu Province, 215127 (CN)
(74) Representative: Levpat

(57) **Abstract**

The present invention relates an aqueous dispersion comprising at least one polyurethane, wherein the at least one polyurethane is prepared from at least the following components (A) at least one polyisocyanate, (B) at least one polymeric polyol having a number average molecular weight of 400 to 6000 g/mol, wherein at least one polycarbonate polyol is present in the polymeric polyol component (B) in an amount of 55 to 100% by weight, based on total weight of component (B), (C) optionally at least one monofunctional nonionic hydrophilizing agent, (D) at least one compound selected from the group consisting of polyols, aminopolyols, polyamines and mixtures thereof, in each case having a number average molecular weight of less than 400 g/mol, (E) at least one compound selected from the group consisting of monools, diols, polyols, monoamines, diamines, polyamines and mixtures thereof, in each case having at least one salt group, preferably an anionic group, or a functional group that can be converted into a salt group, preferably into a anionic group, (F) at least a neutralizer selected from the group consisting of tertiary amine compounds with boiling point above 100 °C at atmospheric pressure, inorganic alkali, preferably potassium hydroxide, sodium hydroxide, and mixtures thereof, wherein the at least one polyurethane dispersion has an average particle diameter D(i)90 of less than or equal to 100 nm, to a coating formulation comprising such an aqueous dispersion, to the use of this aqueous dispersion in a coating formulation, to the process for the coating of a substrate, wherein a coating formulation comprising such an aqueous dispersion used, to the use of such a coating formulation for coating of a substrate and to a substrate coated with the coating formulation.

## Description

The present invention relates an aqueous dispersion comprising at least one polyurethane, wherein the at least one polyurethane is prepared from at least the following components (A) at least one polyisocyanate, (B) at least one polymeric polyol having a number average molecular weight of 400 to 6000 g/mol, wherein at least one polycarbonate polyol is present in the polymeric polyol component (B) in an amount of 55 to 100% by weight, based on total weight of component (B), (C) optionally at least one monofunctional nonionic hydrophilizing agent, (D) at least one compound selected from the group consisting of polyols, aminopolyols, polyamines and mixtures thereof, in each case having a number average molecular weight of less than 400 g/mol, (E) at least one compound selected from the group consisting of monools, diols, polyols, monoamines, diamines, polyamines and mixtures thereof, in each case having at least one salt group, preferably an anionic group, or a functional group that can be converted into a salt group, preferably into a anionic group, (F) at least a neutralizer selected from the group consisting of tertiary amine compounds with boiling point above 100 °C at atmospheric pressure, inorganic alkali, preferably potassium hydroxide, sodium hydroxide, and mixtures thereof, wherein the at least one polyurethane dispersion has an average particle diameter D(i)90 of less than or equal to 100 nm, to a coating formulation comprising such an aqueous dispersion, to the use of this aqueous dispersion in a coating formulation, to the process for the coating of a substrate, wherein a coating formulation comprising such an aqueous dispersion used, to the use of such a coating formulation for coating of a substrate and to a substrate coated with the coating formulation.

Good wet colour matching means that the colour difference between a paint film in wet condition and the colour of a paint film in dry condition is as close as possible. A good wet colour matching is for example helpful in body shops to improve efficiency. In the workflow of base coat repainting, the key step is colour comparing or colour matching, i.e. a comparison between the paint that has been mixed in order to repair the exterior of a car and the corresponding colour of the car.

Solventborne paint formulations normally have better wet colour matching performance than waterborne ones. However, along with more and more strict restriction on VOC for paint makers, there is an increasingly obvious trend of transfer from solventborne to waterborne paint formulations. If a waterborne paint formulation has excellent wet colour matching performance, painters can save more than two hours on average by skipping time waiting for water evaporation.

In addition, with the improvement of people's living standards and the popularization of automobile in ordinary families, people are paying more and more attention to the quality of air inside a car. The evaluation of air quality in the car lies mainly in two aspects, i.e., the content of volatile organic compounds (VOCs) in the car and the degree of odour in the car. In the PP100 (number of problems per 100 cars) list of Initial Quality Study (IQS), "unpleasant odour/smell" has been always at the top of the list in recent years. Consumers are increasingly demanding weak odour in the car. Coating as one of the sources of odour in the car, is required to have low odour as well.

The synthesis process of some polyurethane dispersions known from the prior comprises the use of solvents like N-methylpyrrolidone (NMP) or N-ethylpyrrolidone (NEP) to obtain a product wherein the polyurethane particles have a reduced particle size and the polyurethane dispersion itself has a lower viscosity. However, the use of organic solvents like NMP or NEP is prohibited in more and more industries due to their reproductive toxicity.

Objective of the present invention is therefore to provide a polyurethane dispersion which is essentially free of any organic solvents, in particular free of organic solvents being prohibited to be used in consumer products. In addition, the polyurethane dispersion shall have both improved wet colour matching and lower odour, in particular compared to the polyurethane dispersions known from the prior art.

These objectives have been solved according to the present invention by an aqueous dispersion comprising at least one polyurethane, wherein the at least one polyurethane is prepared from at least the following components:
(A) at least one polyisocyanate,
(B) at least one polymeric polyol having a number average molecular weight of 400 to 6000 g/mol, wherein at least one polycarbonate polyol is present in the polymeric polyol component (B) in an amount of 55 to 100% by weight, based on total weight of component (B),
(C) optionally at least one monofunctional nonionic hydrophilizing agent,
(D) at least one compound selected from the group consisting of monools, diols, polyols, aminopolyols, monoamines, diamines, polyamines and mixtures thereof, in each case having a number average molecular weight of less than 400 g/mol,
(E) at least one compound selected from the group consisting of monools, diols, polyols, monoamines, diamines, polyamines and mixtures thereof, in each case having at least one salt group, preferably an anionic group, or a functional group that can be converted into a salt group, preferably into a anionic group,
(F) at least a neutralizer selected from the group consisting of tertiary amine compounds with boiling point above 100 °C at atmospheric pressure, inorganic alkali, preferably potassium hydroxide, sodium hydroxide, and mixtures thereof,
wherein the at least one polyurethane dispersion has an average particle diameter D(i)90 of less than or equal to 100 nm.

The polyurethane dispersion according to the present invention is described in detail in the following. In the sense of this invention the wording polyurethane means polyurethane and/or polyurethane-urea.

In the sense of this invention the wording "essentially free of any organic solvents" and "free of organic solvents" means the content of organic solvents no more than 1% by weight, based on the total amount of polyurethane dispersion.

The polyurethane dispersion according to the present invention comprises at least one polyurethane which is prepared from at least components (A), (B), (C), (D), (E) and (F) as mentioned above.

Beside components (A), (B), (C), (D), (E) and (F), the at least one polyurethane which is used according to the present invention may comprise further components. According to a preferred embodiment, the at least one polyurethane used according to the present invention does not comprise further components beside components (A), (B), optionally (C), (D), (E) and (F), i.e. the at least one polyurethane which is used according to the present invention consists of (A), (B), optionally (C), (D), (E) and (F).

### Component (A):

At least one polyisocyanate is used as component (A).

In general, any polyisocyanate known to the skilled artisan can be used according to the present invention. According to a preferred embodiment, a mixture of at least two different polyisocyanates is used according to the present invention.

According to the present invention the at least one polyisocyanate is in general an organic compound having at least two isocyanate groups.

The at least one polyisocyanate which is used according to the present invention is therefore preferably selected from the group consisting of diisocyanates having the general formula Y(NCO)₂. where Y is a C4-12 divalent aliphatic hydrocarbon group, i.e. an aliphatic diisocyanate compound, a C6-15 divalent alicyclic hydrocarbon group, i.e. an alicyclic diisocyanate compound, a C6-15 divalent aromatic hydrocarbon group, i.e. an aromatic diisocyanate compound, or a C7-15 divalent araliphatic hydrocarbon group, i.e. an araliphatic diisocyanate compound.

Preferred examples of such organic diisocyanate compounds according to the present invention include tetramethylene diisocyanate, methylpentamethylene diisocyanate, 1,5-pentamethylene diisocyanate, hexamethylene diisocyanate (HDI), dodecamethylene diisocyanate, 1,2-bis(isocyanatomethyl)cyclohexane, 1,4-diisocyanatocyclohexane, 1-isocyanato-3,3,5-trimethyl-5-isocyanatomethylcyclohexane (IPDI, isophorone diisocyanate), 4,4'-diisocyanatodicyclohexylmethane, 4,4'-diisocyanatodicyclohexylpropane-(2,2), 1,4-diisocyanatobenzene, 2,4-diisocyanatotoluene, 2,6-diisocyanatotoluene, 4,4'-diisocyanatodiphenylmethane, 2,2'-diisocyanatodiphenylmethane, 2,4'-diisocyanatodiphenylmethane, tetramethylxylylene diisocyanate, p-xylylene diisocyanate, p-isopropylidene diisocyanate and 1,5-diisocyanatonaphthalene.

The at least one polyisocyanate which is used according to the present invention may also be a polyisocyanate having three or more isocyanate groups per molecule. Such organic polyisocyanate compounds can be exemplified by polyisocyanate, which is, for example, prepared by modification of aliphatic, alicyclic, araliphatic and/or aromatic diisocyanate, composed of at least two types of diisocyanate, and has an uretdione, isocyanurate, urethane, allophanate, biuret, carbodiimide, iminooxadiazinedione and/or oxadiazinetrione structure. An example of unmodified polyisocyanate having three or more isocyanate groups per molecule includes 4-isocyanatomethyl-1,8-octane diisocyanate (nonane triisocyanate).

According to a preferred embodiment of the present invention the at least one polyisocyanate is selected from the group consisting of hexamethylene diisocyanate (HDI), 1-isocyanato-3,3,5-trimethyl-5-isocyanatomethylcyclohexane (IPDI, isophorone diisocyanate), 4,4'-diisocyanatodicyclohexylmethane (Desmodur^{®} W), and mixtures thereof.

Particularly preferably, a mixture of 4,4'-diisocyanatodicyclohexylmethane (Desmodur^{®} W) and 1-isocyanato-3,3,5-trimethyl-5- isocyanatomethylcyclohexane (IPDI, isophorone diisocyanate) is used. Mole ratio of 4,4'-diisocyanatodicyclohexylmethane (Desmodur^{®} W) and 1-isocyanato-3,3,5-trimethyl-5- isocyanatomethylcyclohexane (IPDI, isophorone diisocyanate) is preferably from 1: 10 to 10: 1, more preferably from 1 : 6 to 6 : 1.

In general, component (A) is present in the polyurethane according to the present invention in an amount of 5 to 60% by weight, preferably 10 to 50% by weight, particularly preferably 15 to 45% by weight, in each case in respect of the polyurethane.

### Component (B):

At least one polymeric polyol having a number average molecular weight of 400 to 6000 g/mol, wherein at least one polycarbonate polyol is present in the polymeric polyol component (B) in an amount of 55 to 100% by weight, based on total weight of component (B), is used as component (B).

The polymeric polyol used as component (B) having a molecular weight of 400 to 6000 g/mol has at least two isocyanate-reactive hydroxyl groups.

Examples of the at least one polymeric polyol compound used according to the present invention are selected from the group consisting of polyether polyols, polyester polyols, polycarbonate polyols, polycarbonate polyester polyols, polylactone polyols, polybutadiene polyols, silicone polyols and mixtures thereof.

A preferred component (B) preferably comprises two to four, particularly preferably two to three, most preferably two hydroxyl groups. Moreover, component (B) may also be a mixture of various compounds of such type.

Examples of polyether polyols include cyclic ether polyadducts and polyhydric alcohol condensates. Examples of the cyclic ether include styrene oxide, ethylene oxide, propylene oxide, tetrahydrofuran, butylene oxide and epichlorohydrin, and these may be used alone or in combination.

Polyester polyols used according to the present invention are preferably polyester polyols having hydroxyl groups at least at both ends of the main chain. Examples of the polyester polyol include linear polyester diol and slightly branched polyester polyol. These can be prepared by a known method using aliphatic, alicyclic or aromatic dicarboxylic acids and diols and optionally using polycarboxylic acids and/or highly functional polyols.

Examples of polylactone polyols used as component (B) are homopolymers or copolymers of lactones, having hydroxyl groups at least at both ends of the main chain.

Examples of polycarbonate polyols used as component (B) according to the present invention are obtained by the reaction of diols and aryl carbonates, for example, diphenyl carbonate, and/or alkyl carbonates, for example, dimethyl carbonate, wherein said diols is one or more selected from a group consisting of consisting of 1,3-propanediol, 1,4-butanediol, 1,5-pentanediol, 1,6-hexanediol and 2,2-dimethyl-1,3-propanediol. Preferably polycarbonate polyols obtained from dimethylcarbonate and 1,6-hexanediol are used.

The polycarbonate polyol according to the present invention has preferably hydroxyl groups at least at both ends of the main chain, which is produced by adjusting the production conditions of the polycarbonate.

Preferably, at least one polycarbonate polyol is used as component (B) according to the present invention, which is selected from a group consisting of polycarbonate obtained by reaction of dimethyl carbonate with 1,6-hexanediol, polycarbonate obtained by reaction of dimethyl carbonate with 1,6-hexanediol and 1,4-butanediol, and/or a copolymer of polycaprolactone and polycarbonate obtained by reaction of dimethyl carbonate and 1,6-hexanediol. The preferred number average molecular weight of polycarbonate polyester polyol is between 1000 to 4000 g/mol.

The at least one polycarbonate polyol is present in the polymeric polyol component (B) in an amount of 55 to 100% by weight.

The silicone polyol used as component (B) according to the present invention includes silicone oils having a hydroxyl group at the end having a siloxane bond in the molecule.

Preferably, according to the present invention, the at least one polymeric polyol (B) is selected from the group consisting of polycarbonate polyols, polyester polyols, polyether polyols, polycarbonate polycaprolactone polyols and mixtures thereof.

The polymeric polyol used as component (B) has a molecular weight of 400 to 6000 g/mol, preferably 800 to 5000 g/mol, more preferably 1000 to 4000 g/mol.

According to the present invention, component (B) is contained in the polyurethane used according to the present invention by preferably 20 to 85 % by weight, more preferably 25 to 80% by weight, still more preferably 30 to 75% by weight, in each case in respect of the polyurethane.

### Component (C):

At least one monofunctional nonionic hydrophilizing agent is used as optional component (C).

Examples of monofunctional nonionic hydrophilizing agent that can be used as component (C) according to the present invention are selected from the group consisting of polyethylene oxide mono alkyl ether and polyethylene oxide polypropylene oxide copolymer mono alkyl ether; preferred one or more selected from a group comprising of polyethylene oxide mono methyl ether and polyethylene oxide polypropylene oxide copolymer mono methyl ether and mixtures thereof.

In case that at least one monofunctional nonionic hydrophilizing agent is present in the polyurethane according to the present invention, it is used in an amount of preferably less than 10% by weight, more preferably less than 5% by weight, based on the solid content of the aqueous polyurethane resin. In case that at least one monofunctional nonionic hydrophilizing agent is present in the polyurethane according to the present invention, the lower limit of the amount is in general 0.1 % by weight, based on the solid content of the aqueous polyurethane resin.

### Component (D):

At least one compound selected from the group consisting of monools, polyols, aminopolyols, monoamines, polyamines and mixtures thereof, in each case having a number average molecular weight of less than 400 g/mol, is used as component (D).

Monoamines according to the present invention are compounds having one amino or imino group. Examples of the monoamine compound include propylamine, butylamine, amylamine, hexylamine, 1-tetradecylamine and mixtures thereof.

Polyamines according to the present invention are compounds having two or more amino and/or imino groups. Examples of the polyamine compound include triamine compounds such as diethylenetriamine, bis(2-aminopropyl)amine and bis(3-aminopropyl)amine, tetramine compounds such as triethylenetetramine, tripropylenetetramine, N-(benzyl)triethylenetetramine, N,N'-(dibenzyl)triethylenetetramine and N-(benzyl)-N‴-(2-ethylhexyl)triethylenetetramine, pentamine compounds such as tetraethylenepentamine and tetrapropylenepentamine, hexamine compounds such as pentaethylenehexamine and pentapropylenehexamine, and polyamine compounds such as polyethyleneimine and polypropyleneimine, and mixtures thereof. From the viewpoint of the reactivity with a polyurethane prepolymer, polyamine is preferably polyamine having two amino groups and one or more imino groups, such as diethylenetriamine, triethylenetetramine, bis(2-aminopropyl)amine, bis(3- aminopropyl)amine, tripropylenetetramine, tetraethylenepentamine, tetrapropylenepentamine, pentaethylenehexamine or pentapropylenehexamine.

Examples of diamine compounds which can be used as component (D) include hydrazine, 1,2-ethanediamine, 1,4-tetramethylenediamine, 2-methyl-1,5-pentanediamine, 1,6- hexamethylenediamine, 1,4-hexamethylenediamine, 3- aminomethyl-3,5,5-trimethylcyclohexylamine, 1,3-bis(aminomethyl)cyclohexane, xylylenediamine, piperazine, 2,5-dimethylpiperazine and mixtures thereof.

Monools according to the present invention are compounds having one hydroxyl groups. Examples of monool compounds which can be used as component (D) include butyl glycol, diethylene glycol monobutylether, di(propylene glycol)butyl ether and mixtures thereof.

Polyols according to the present invention are compounds having two or more hydroxyl groups. Examples of polyol compounds which can be used as component (D) include ethanediol, diethylene glycol, triethylene glycol and tetraethylene glycol, 1,2-propanediol, dipropylene glycol, tripropylene glycol, tetrapropylene glycol, 1,3-propanediol, 1,4-butanediol, 1,3-butanediol, 2,3-butanediol, 1,5-pentanediol, 1,6-hexanediol, 2,2- dimethyl-1,3-propanediol, 1,4-dihydroxycyclohexane, 1,4-dimethylcyclohexane, 1,8-octanediol, 1,10-decanediol, 1,12-dodecanediol, neopentyl glycol, 1,4-cyclohexanediol, 1,4-cyclohexanedimethanol, 1,4-dihydroxybenzene, 1,3-dihydroxybenzene, 1,2-dihydroxybenzene, 2,2-bis(4- hydroxyphenyl)-propane(bisphenol A), TCD-diol, trimethylolpropane, glycerol, pentaerythritol, dipentaerythritol and mixtures thereof.

Aminopolyols according to the present invention are organic compounds having one or more hydroxyl groups and one or more amino groups.

Examples of aminopolyols which can be used as component (D) include ethanolamine, propanolamine, butylethanolamine, 1-amino-2-methyl-2-propanol, 2-amino-2-methylpropanol, diethanolamine, diisopropanolamine, dimethylaminopropylethanolamine, dipropanolamine, N-methylethanolamine, N-ethylethanolamine and mixtures thereof

According to the present invention, one type may be used alone, or a plurality of types may be used in combination as component (D).

The amount of component (D) is preferably not more than the equivalent of the residual isocyanate group obtained after the reaction of polyisocyanate and polyol. The amount of the reactive groups in component (D) is preferably 0.6 to 0.99 equivalent of the residual isocyanate group.

### Component (E):

At least one compound selected from the group consisting of monools, diols, polyols, monoamines, diamines, polyamines and mixtures thereof, in each case having at least one salt group, preferably an anionic group, or a functional group that can be converted into a salt group, preferably into a anionic group is used as component (E).

The at least one salt group present in component (E) is preferably at least one acidic group. According to the present invention, the at least one acidic group can be selected from a carboxylic acid group or a sulfonic acid group.

Component (E) is preferably a compound having at least two or more hydroxy groups and/or two or more amino groups. Preferably at least one compound having at least two or more hydroxy groups is used a s component (E).

A combination of at least one carboxylic acid group-containing compound and at least one sulfonic acid group-containing compound may be used. Preferably, at least one carboxylic acid group-containing compound is used as component (E).

Component (E) is preferably present in the at least one polyurethane used according to the present invention in an amount that the total weight of the carboxylic acid group-containing compound and/or the sulfonic acid group-containing compound is preferably 0.5 to 10% by weight, more preferably 1 to 7% by weight, in each case in respect of the polyurethane.

The ratio of an acid value of the carboxylic acid group to the total acid value in the component (E) is preferably 0.20 to 1.00, more preferably 0.50 to 1.00, still more preferably 0.70 to 1.00. The acid value herein refers to a calculated value (mgKOH/g) expressed in the number of mg of potassium hydroxide required to neutralize the carboxyl group or the sulfo group present in the polyurethane resin. The total acid value refers to the sum total of the acid value of the carboxyl group and the acid value of the sulfo group.

Specific examples of the acidic group-containing compounds that can be used as component (E) according to the present invention are acidic group-containing diol compounds having 4 to 12 carbon atoms, particularly preferably selected from N-(2-aminoethyl)-2-aminoethanesulfonic acid, N-(3-aminopropyl)-2-aminoethanesulfonic acid, N-(3-aminopropyl)-3-aminopropanesulfonic acid, N-(2-aminoethyl)-3-aminopropanesulfonic acid, 2,2-dimethylolpropionic acid, 2,2-dimethylolbutanoic acid, N,N-bishydroxyethylalanine, 3,4-dihydroxybutanesulfonic acid, 3,6-dihydroxy-2-toluenesulfonic acid, and sodium salts, lithium salts, potassium salts, tertiary amine salts and the like which are reaction products obtained by Michael addition of diamine (e.g., 1,2-ethanediamine or isophorone diamine) with twice the molar quantity of acrylic acid or maleic acid.

Most preferably, component (E) is selected one or more from the group consisting of 2,2-dimethylolpropionic acid, 2,2-dimethylolbutanoic acid, N,N- bishydroxyethylglycine, N,N-bishydroxyethylalanine, 3,4- dihydroxybutanesulfonic acid, 3,6-dihydroxy-2-toluenesulfonic acid, 2-[(2-aminoethyl)amino]ethanesulphonic acid and their salts, and mixtures thereof.

### Component (F):

At least a neutralizer selected from the group consisting of tertiary amine compounds with boiling point above 100 °C at atmospheric pressure, inorganic alkali, preferably potassium hydroxide, sodium hydroxide, and mixtures thereof, is present as component (F).

The at least one neutralizer with boiling point higher than 100 °C at atmospheric pressure.is in general used to neutralize at least some of the acidic groups of the polyurethane prepolymer and disperse the polyurethane prepolymer in the aqueous medium. Examples of the tertiary amine compounds such as trialkylamines preferably include N,N-diisopropylethylamine, tributylamine and the like, N,N-dialkylalkanolamines including N,N-dimethylethanolamine, N,N-dimethylpropanolamine, N,N-dipropylethanolamine, 1-dimethylamino-2-methyl-2-propanol and the like, N-alkyl-N,N-dialkanolamines, and trialkanolamines including triethanolamine, inorganic alkali salts of potassium hydroxide, sodium hydroxide and the like.. These may be used alone or in combination of two or more. From the viewpoint of workability, the neutralizer is preferably organic amines, more preferably N,N-dimethylethanolamine or N,N-diisopropylethylamine. The amount of the neutralizer is, for example, 0.4 to 1.2 equivalent, preferably 0.6 to 1.0 equivalent per equivalent of acidic groups possessed by the aqueous polyurethane resin composition.

Component (F) is preferably present in the at least one polyurethane used according to the present invention in an amount of 1 to 10% by weight, more preferably 1.5 to 8 % by weight, in each case in respect of the polyurethane.

Preferably, the amounts of components (A), (B), optionally (C), (D), (E) and (F) add up to 100% by weight in each case.

The polyurethane dispersion according to the present invention comprises the at least one polyurethane in general in an amount of 20 to 60 % by weight, preferably 25 to 50% by weight, particularly preferably 30 to 40 % by weight, in each case in respect of the polyurethane dispersion. This solid content is measured by Metteler Teredo Halogen Moisture Analyzer Excellence HS153 at 120 °C.

The polyurethane present in the polyurethane dispersion according to the present invention has an average particle size of in general 25 to 70 nm, preferably 30 to 60 nm, particularly preferably 30 to 55 nm.

The polyurethane dispersion according to the present invention, has an average particle diameter D(i)90 of less than or equal to 100 nm, preferably 20 to 95 nm, particularly preferably 50 to 90 nm. This average particle diameter is tested by Malvern Zetasizer Nano ZS particle analyzer at 23 °C.

In particular, the average particle diameter D(i)90 gives rise to the technical effect according to the present invention and to the solution of the objectives according to the present invention. If the average particle diameter D(i)90 is less than or equal to 100 nm, the wet colour matching of a coating composition comprising this polyurethane dispersion is significantly improved.

The polyurethane dispersion according to the present invention has a viscosity of in general 50 to 1500 mPa·s, preferably 70 to 1500 mPa·s, particularly preferably 80 to 1200 mPa·s. This viscosity is measured according to tested by Brookfield DV-II+ Pro viscometer at room temperature (23 ± 2 °C), using spindle S62 at rotation speed 30 rpm according to ISO 3219:1994.

The polyurethane dispersion according to the present invention has an average transmittance of in general more than 30%, preferably 40 to 99%, particularly preferably 55 to 99%. This average transmittance is tested by UV-2600 UV-VIS spectrophotometer (SHIMADZU, Japan) of light wavelength in the range between 420 nm and 700 nm at 23 °C.

The average molecular weight of the polyurethane resin in the aqueous polyurethane resin composition of the present invention is not particularly limited and can be selected in a range that gives dispersibility and a good coating film as an aqueous coating material, which is preferably 5000 to 500000 g/mol, more preferably 10000 to 100000 g/mol. In this specification, the average molecular weight of the polyurethane resin is a number average molecular weight measured by gel permeation chromatography, and polystyrene is used as a standard substance.

The acid value of the carboxylic acid groups in the polyurethane in the aqueous polyurethane dispersion according to the present invention is preferably in the range from 4.5 to 30 mg KOH/g, more preferably in the range from 5 to 28 mg KOH/g, still more preferably in the range from 10 to 25 mg KOH/g. In this specification, the acid value of the resin means the number of mg of potassium hydroxide required to neutralize 1 g of the resin. The acid value is a value measured in accordance with the indicator titration method of JIS K 1557:2007.

The hydroxyl value of the polyol in the aqueous polyurethane dispersion according to the present invention is not particularly limited, but is usually in the range from 1 to 100 mg KOH/g. In this specification, the hydroxyl value of the resin means the number of milligrams (mg) of potassium hydroxide equivalent to the hydroxyl groups in 1 g of the polyol. The hydroxyl value is a value measured in accordance with the indicator titration method of Method B of JIS K 1557:2007.

The polyurethane dispersion according to the present invention is an aqueous dispersion, which does not comprise any organic solvents. Preferably, the upper limit of the content of organic solvent in the polyurethane dispersion according to the present invention is 1% by weight. The inventors of the present invention have surprisingly found that the polyurethane dispersion according to the present invention has a low viscosity even without the presence of an organic solvent.

The present invention further relates to the process for the preparation of the polyurethane dispersion according to the present invention, at least comprising the following steps:
a. Charging a reaction vessel with at least one polymeric polyol (B) and optionally monofunctional nonionic hydrophilizing agent (C), optionally removing contained water below 0.2% by weight, preferably below 0.1% by weight, of the precharged mixture by increasing temperature and/or reducing pressure and/or purging with nitrogen under agitation,
b. Charging a reaction vessel with part of or all amount of component (D) and/or part or all amount of component (E),
c. Reacting the precharged contents of the reaction vessel by dosing the mixture at least comprising at least one polyisocyanate (A), for example at a temperature of 60 to 135 °C and reacting the mixture at the a temperature of 60 to 135 °C temperature to obtain a prepolymer,
d. Before or after step c, adding a solvent that is miscible with water but inert to the isocyanate group to dissolve the prepolymer from step c,
e. Reacting the prepolymer with the parts of component (D) and component (E) which have not been already added in step b, for example at a temperature of 30 to 60 °C, to obtain the polyurethane or polyurethane-urea,
f. Before or after step d or e, adding at least one neutralizer, and
g. Before, during or after step e, adding water to obtain the aqueous polyurethane-urea dispersion,
h. Removing solvent, preferably by distillation.

The solvent that is miscible with water but inert to the isocyanate group is preferably selected from the group consisting of acetone, methyl ethyl ketone (MEK), propylene glycol dimethyl ether, any other ether/ester which have no OH functional group and mixtures thereof.

In the process for producing the aqueous polyurethane dispersion, the step of neutralizing the acidic groups and the step of dispersing the polyurethane prepolymer in the aqueous medium may be performed separately or together. In the method for producing the aqueous polyurethane dispersion, the step of reacting the polyurethane prepolymer with the compound (D) may be after the step of dispersing the polyurethane prepolymer in the aqueous medium or may be performed together with the step of dispersing the polyurethane prepolymer in the aqueous medium.

Each step in the process for producing the aqueous polyurethane resin composition may be performed under an inert gas atmosphere or may be performed in the atmosphere.

The aqueous polyurethane dispersion can contain a neutralizer with boiling point higher than 100 °C at atmospheric pressure.. The neutralizer is used to neutralize at least some of the acidic groups of the polyurethane prepolymer and disperse the polyurethane prepolymer in the aqueous medium. Examples of the neutralizer include tertiary amine compounds such as trialkylamines including N,N-diisopropylethylamine, tributylamine and the like, N,N-dialkylalkanolamines including N,N-dimethylethanolamine, N,N-dimethylpropanolamine, N,N-dipropylethanolamine, 1-dimethylamino-2-methyl-2-propanol and the like, N-alkyl-N,N-dialkanolamines, and trialkanolamines including triethanolamine, inorganic alkali salts of potassium hydroxide, sodium hydroxide and the like. These may be used alone or in combination of two or more. From the viewpoint of workability, the neutralizer is preferably organic amines, more preferably N,N-dimethylethanolamine or N,N-diisopropylethylamine. The amount of the neutralizer is, for example, 0.4 to 1.2 equivalent, preferably 0.6 to 1.0 equivalent per equivalent of acidic groups possessed by the aqueous polyurethane resin composition.

The aqueous polyurethane dispersion according to the present invention can be further mixed with a solvent. The solvent is one or more selected from a group consisting of butyl glycol, butyl diglycol ethanol, 1-methoxy-2-propanol, dipropylene glycol monomethyl ether, propylene glycol butyl ether, di(propylene glycol) butyl ether and mixtures thereof. The amount of this solvent s preferably 10 to 25% by weight, based on the amount of the PUD as 100% by weight.

In an preferred embodiment of the invention, the temperature of water introduced in step g is controlled and preferably set to a temperature between 0 and 40 °C, more preferably between 2 and 30 °C and especially preferred between 5 and 20 °C.

It is also beneficial to control the ionic content of the water added in step g which can be done by measuring conductivity or hardness of the water using established testing or measuring methods. A low conductivity and low ion concentration is preferred as can be achieved for example by running the tab water through ion exchange resins. The preferred conductivity of the water is below 0.2 µS/cm.

The present invention further relates to the coating formulation comprising at least one aqueous dispersion according to the present invention.

The present invention also relates to the use of the aqueous dispersion according to the present invention in a coating formulation.

The present invention also relates to the process for the coating of a substrate, wherein a coating formulation comprising the aqueous dispersion according to the present invention is used.

The present invention also relates to the use of a coating formulation according to the present invention for coating of a substrate.

The present invention also relates to a substrate coated with a coating formulation according to the present invention.

According to the present invention the coating composition can be a painting composition or an ink composition.

In addition to the aqueous polyurethane dispersion, another resin may be added to the coating composition of the present invention.

Examples of another resin include a polyester resin, an acrylic resin, a polyether resin, a polycarbonate resin, a polyurethane resin, an epoxy resin, an alkyd resin, a polyolefin resin, a vinyl chloride resin and the like. These may be used alone or in combination of two or more. From the viewpoint of dispersibility in water, another resin preferably has one or more types of hydrophilic groups. The hydrophilic groups include a hydroxyl group, a carboxy group, a sulfo group, a polyethylene glycol group and the like.

The polyester resin can be usually produced by esterification or transesterification between an acid component and an alcohol component. For the acid component, a compound normally used as an acid component to produce a polyester resin can be used. For example, an aliphatic polybasic acid, an alicyclic polybasic acid, an aromatic polybasic acid or the like can be used as the acid component.

The acrylic resin is preferably a hydroxyl group- containing acrylic resin, for example. The hydroxyl group- containing acrylic resin can be produced by a known method such as, for example, a solution polymerization method in an organic solvent or an emulsion polymerization method in water, in which a hydroxyl group-containing polymerizable unsaturated monomer is copolymerized with another polymerizable unsaturated monomer copolymerizable with the hydroxyl group-containing polymerizable unsaturated monomer.

The hydroxyl group-containing polymerizable unsaturated monomer is a compound having one or more hydroxyl group and one or more polymerizable unsaturated bond in one molecule. Examples thereof include: monoesterified products from a (meth)acrylic acid and a dihydric alcohol having 2 to 8 carbon atoms, such as 2- hydroxyethyl (meth)acrylate, 2-hydroxypropyl (meth)acrylate, 3-hydroxypropyl (meth)acrylate and 4-hydroxybutyl (meth)acrylate; caprolactone modified products of these monoesterified products; N-hydroxymethyl (meth)acrylamide; allyl alcohol; (meth)acrylate having a polyoxyethylene chain with a hydroxyl group at the molecular end; and the like.

The hydroxyl group-containing acrylic resin preferably has an anionic functional group. The hydroxyl group-containing acrylic resin having an anionic functional group can be produced by, for example, using a polymerizable unsaturated monomer having an anionic functional group such as a carboxylic acid group, a sulfonic acid group or a phosphoric acid group as one type of the polymerizable unsaturated monomer.

Examples of the polyether resin include a polymer or copolymer having an ether bond, such as polyoxyethylene-based polyether, polyoxypropylene-based polyether, polyoxybutylene-based polyether, polyether derived from an aromatic polyhydroxy compound including bisphenol A, bisphenol F or the like, and the like.

Examples of the polycarbonate resin include polymers produced from bisphenol A, 3-methyl-1,5-pentanediol and 1,6-hexanediol.

Examples of the epoxy resin include a resin obtained by reaction of a bisphenol compound with epichlorohydrin, and the like. Examples of the bisphenol include bisphenol A and bisphenol F.

Examples of the alkyd resin include alkyd resins obtained, for example, by reacting a polybasic acid such as phthalic acid, terephthalic acid or succinic acid and polyhydric alcohol further with a modifier such as fat and oil/fat and oil acid, e.g. soybean oil, flaxseed oil, palm oil, stearic acid or the like, or a natural resin, e.g. rosin, succinite or the like.

Examples of the polyolefin resin include a resin obtained by subjecting a polyolefin resin, which is obtained by polymerizing or copolymerizing an olefin-based monomer with another monomer in accordance with a normal polymerization method as appropriate, to water dispersion using an emulsifier or by emulsion polymerization of an olefin-based monomer together with another monomer as appropriate. Moreover, in some cases, a so-called chlorinated polyolefin-modified resin, which is obtained by chlorinating the polyolefin resin, may be used.

Examples of the olefin-based monomer include olefins such as ethylene, propylene, 1-butene, 3-methyl-1- butene, 4-methyl-1-pentene, 3-methyl-1-pentene, 1-heptene, 1-hexene, 1-decene and 1-dodecne; and conjugated dienes and nonconjugated dienes such as butadiene, ethylidene norbornene, dicyclopentadiene, 1,5-hexadiene and styrenes. These monomers may be used alone or in combination of two or more. Examples of another monomer copolymerizable with the olefin-based monomer include vinyl acetate, vinyl alcohol, maleic acid, citraconic acid, itaconic acid, maleic anhydride, citraconic anhydride and itaconic anhydride.

These monomers may be used alone or in combination of two or more.

The coating composition according to the present invention can further include a curing agent. By including a curing agent, it is possible to improve the durability of a painting film, a multilayer painting film, a coating film or a printed matter obtained by using the coating composition.

For example, polyisocyanate, blocked polyisocyanate, melamine resin, carbodiimide, oxazoline, aziridine, hydrazine or the like can be used as the curing agent. These curing agents may be used along or in combination of two or more.

The polyisocyanate is not particularly limited as long as the polyisocyanate has two or more isocyanate groups in the molecule, and examples thereof include those the same as those exemplified as the polyisocyanate compounds (a).

The blocked polyisocyanate is not particularly limited as long as the blocked polyisocyanate has two or more block isocyanate groups in the molecule, and examples thereof include the polyisocyanate compounds or compounds obtained by giving hydrophilicity to the polyisocyanate compounds blocked by a known blocking agent, like phenols, secondary or tertiary alcohols, oximes, aliphatic or aromatic secondary amines, phthalic imides, lactams, an active methylene compound, e.g. malonic acid dialkyl ester or the like, a pyrazole-based compound, e.g. pyrazole, 3,5-dimethylpyrazole or the like, acidic sodium sulfite, and the like.

The melamine resin is not particularly limited, and one normally used as a curing agent can be used. For example, the melamine resin is preferably an alkyl etherified melamine resin obtained by alkyl etherification, more preferably a melamine resin substituted with a methoxy group and/or a butoxy group. Such a melamine resin includes: those having a methoxy group alone, such as Cymel 325, Cymel 327, Cymel 370 and My Coat 723; those having both a methoxy group and a butoxy group, such as Cymel 202, Cymel 204, Cymel 211, Cymel 232, Cymel 235, Cymel 236, Cymel 238, Cymel 251, Cymel 254, Cymel 266, Cymel 267 and Cymel 285 (all of them are trade names, manufactured by Nippon Cytec Industries, Ltd.); and those having a butoxy group alone, such as My Coat 506 (a trade name, manufactured by Mitsui-Cytec Ltd.), U-VAN 20N60 and U-VAN 20SE (all of them are trade names, manufactured by Mitsui Chemicals, Inc.). These may be used alone or in combination of two or more. Of these, Cymel 211, Cymel 251, Cymel 285, Cymel 325, Cymel 327, and My Coat 723 are more preferable.

The carbodiimide is not particularly limited as long as the carbodiimide is a compound having two or more carbodiimide groups in the molecule. For example, aliphatic polycarbodiimide [poly(hexamethylenecarbodiimide) and the like], alicylic polycarbodiimide [poly(4,4'-dicyclohexylmethanecarbodiimide) and the like] and aromatic polycarbodiimide [poly(p-phenylenecarbodiimide), poly(4,4'-diphenylmethanecarbodiimide), poly(diisopropylphenyl-carbodiimide) and the like], which are obtained by polymerizing the aromatic polyisocyanate having 8 to 26 carbon atoms, aliphatic polyisocyanate having 4 to 22 carbon atoms, alicyclic polyisocyanate having 8 to 18 carbon atoms or araliphatic polyisocyanate having 10 to 18 carbon atoms, can be used. For example, "Carbodilite V-01", "Carbodilite V-02", "Carbodilite V-03", "Carbodilite V-04", "Carbodilite V-05", "Carbodilite V-07", "Carbodilite V-09", "Carbodilite E-02", "Carbodilite E-03A", "Carbodilite E-04", each manufactured by Nisshinbo Chemical Inc., and the like can be listed as commercially available products.

The oxazoline is not particularly limited as long as the oxazoline is a compound having two or more oxazoline groups (oxazoline backbone) in the molecule. Examples thereof include: a compound having two or more oxazoline groups, such as 2,2'-isopropylidenebis(4-phenyl-2- oxazoline); a (co)polymer of polymerizable oxazoline compounds such as 2-isopropenyl-2-oxazoline, 2-vinyl-2-oxazoline and 2-vinyl-4-methyl-2-oxazoline; a copolymer of the polymerizable oxazoline compounds and a copolymerizable monomer that does not react with the oxazoline groups [(meth)acrylic esters, such as methyl (meth)acrylate, ethyl (meth)acrylate, hydroxyethyl (meth)acrylate and polyethylene glycol (meth)acrylate, (meth)acrylic acid amide vinyl acetate, styrene,-methylstyrene sodium styrenesulfonate or the like]; and the like. "Epocros K- 2010E", "Epocros K-2020E" and "Epocros WS-500" manufactured by Nippon Shokubai Co., Ltd. and the like can be listed as commercially available products.

The aziridine is not particularly limited as long as the aziridine is a compound having two or more aziridinyl groups in the molecule. Examples thereof include tetramethylolmethane tris(aziridinylpropionate) and trimethylolpropane tris(aziridinylpropionate).

The hydrazine include hydrazine and compounds having two or more hydrazine groups (hydrazine backbone) in the molecule [e.g., dicarboxylic acid dihydrazide having 2 to 10 carbon atoms (oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide, itaconic acid dihydrazide and the like) and alkylene dihydrazine having 2 to 10 carbon atoms (ethylene dihydrazine, 1,3-propylene dihydrazine, 1,4-butylene dihydrazine, 1,6-hexylene dihydrazine or the like)]

A color pigment, an extender pigment and a bright pigment can be added to the coating composition of the present invention. Examples of the color pigment include titanium oxide, zinc white, carbon black, iron oxide yellow, iron oxide red, molybdenum red, Prussian blue, cobalt blue, azo pigment, phthalocyanine pigment, quinacridone pigment, isoindoline pigment, selenium-based pigment, perylene pigment and the like.

Examples of the extender pigment include clay, kaolin, barium sulfate, barium carbonate, calcium carbonate, talc, silica and alumina white. It is preferable to use barium sulfate and/or talc as the extender pigment, and barium sulfate is more preferably used. These may be used alone or in combination of two or more.

For example, aluminum, copper, zinc, brass, nickel, aluminum oxide, mica, aluminum oxide coated with titanium oxide or iron oxide, or mica coated with titanium oxide or iron oxide can be used as the bright pigment.

The coating composition of the present invention can contain ordinary additives, such as a thickener, a curing catalyst, an ultraviolet absorber, a light stabilizer, an antifoaming agent, a plasticizer, a surface conditioner and an antisettling agent, depending on the function or use thereof. These may be used alone or in combination of two or more, or a commercially available product may be used as it is.

A process for producing the coating composition of the present invention is not particularly limited and can adopt a known production method. However, the coating compositions are suitably produced by mixing the aqueous polyurethane dispersion with various resins and additives mentioned above, further adding the aqueous medium, and adjusting the viscosity for the application method.

The present invention therefore also relates to a process for the production of the coating composition according to the present invention by mixing the aqueous polyurethane dispersion according to the present invention with suitable resins and additives, further adding the aqueous medium, and adjusting the viscosity.

Suitable substrates to which the coating composition according to the present invention can be applied include: metal materials usually used for automobile bodies or parts, road materials, building materials for home, and the like, e.g., an electrodeposition-coated steel sheet, a phosphated steel sheet, a galvanized steel sheet, a cold rolled steel sheet, an aluminum sheet, a stainless sheet, a zinc phosphate treated steel sheet, an iron phosphate treated steel sheet and the like, or plastic materials such as polyurethane, polycarbonate, polybutylene terephthalate, polyamide, polyphenylene oxide, an acrylonitrile/butadiene/styrene copolymer, i.e., ABS resin, polypropylene and unsaturated polyester, generally abbreviated as SMC. However, the present invention is not limited thereto.

The substrates may be used as they are or may be subjected to surface treatment such as degreasing or primer painting and/or intermediate painting. These treatments may be performed alone or in combination of two or more.

To repair a multilayer coating film previously applied on the material by using the coating composition according to the present invention, it is preferable to first subject the coating film portion requiring a repair to solvent cleaning or sanding treatment and then paint.

The coating composition according to the present invention may be adjusted, before use, to have a specific viscosity which is suitable for a conventional coating method such as air spray, airless spray or electrostatic coating or for obtaining a desired film thickness. For example, to coat a plastic material, the aqueous painting composition is preferably adjusted, before use, to have a solid content of about 10 to 40% by weight and a viscosity of about 800 to 5.000 m·Pas (measured with a B-type viscometer) by adding deionized water and, if necessary, additives such as a thickener and an antifoaming agent.

The aforementioned suitable substrates may be coated with a monocoat of the coating composition according to the present invention, but an intermediate coating material can be applied, by a so-called wet-on-wet method or a wet-on-wet method after preheating, on the applied coating material of the coating composition according to the present invention.

Meanwhile, after applying, on an electrodeposition film, a coating material of the coating composition according to the present invention, top coating can be performed by a wet-on-wet method or a wet-on-wet method after preheating. Preheating is a method for heating at 40 to 80 °C for 5 to 60 minutes, for example, at 80 °C for 5 minutes, and is performed by hot air heating, infrared irradiation or the like.

The dry film thickness of the coating composition used for coating may vary depending on the coating method or the necessity but may be usually about 10 to 50 µm.

The applied coating composition is then completely or incompletely dried by settings at room temperature, air drying or dried by the forced drying using hot air drying or an infrared heater or the like, or in some cases, is completely or incompletely cured by being baked at a temperature of not more than 120 °C to obtain an aqueous coating film. In particular, to form an aqueous coating film on a plastic material according to the present invention, it is preferable to obtain an aqueous film by drying the water content to about not more than 25% by weight with air drying or hot air drying at 40 to 120 °C after coating. Alternatively, in order to repair a multilayer coating film, it is preferable to obtain an aqueous film by drying with an air blow or hot air up to 80 °C after coating.

Since the aqueous polyurethane dispersion according to the present invention has good fluidity even when the composition has a high solid content, a coating material using the composition has good finished appearance.

Moreover, the adhesion of the coating film using the composition to the substrate, particularly the adhesion to the electrodeposition coating film, is good, and excellent impact resistance is given even in a single coating (monocoat) system and a multilayer coating system. The aqueous polyurethane dispersion according to the present invention is suitable as a raw material for an aqueous coating material to coat an electrodeposition film.

A particular advantage of the polyurethane dispersion according to the present invention is that the wet colour matching is improved so that in case that, for example, automobile bodies or parts, have to be repaired, a significant amount of time can be saved, because there is no need to let the coating dry before evaluation, if the premixed colour is the colour of the automobile.

### Examples:

### Raw materials and reagents

Polycarbonate polyester diol Desmophen^{®} C 1200: polycarbonate polycaprolactone copolymer polyol, polycarbonate content 55% by weight, number-average molecular weight = 2000 g/mol, commercially available from Covestro AG, Germany.

Polycarbonate polyester diol Desmophen^{®} C 2202: polycarbonate diol, polycarbonate content 100% by weight, number-average molecular weight = 2000 g/mol, commercially available from Covestro AG, Germany.

Polyester I: a polyester diol comprising 1,6-hexanediol, neopentyl glycol and adipic acid, OH value 66, number-average molecular weight 1700 g/mol, commercially available from Covestro AG, Germany.

Polyether LB 25: a mono-hydroxyl functional polyether, number-average molecular weight 2250 g/mol, commercially available from Covestro AG, Germany.

Desmodur^{®} H: 1,6-hexamethylene diisocyanate, commercially available from Covestro AG, Germany.

Desmodur^{®} W: dicyclohexylmethane diisocyanate, commercially available from Covestro AG, Germany.

Desmodur^{®} I: isophorone diisocyanate, commercially available from Covestro AG, Germany.

### Synthesis of PUDs

### Example 1

150 g of Desmophen^{®} C 1200 was dehydrated at 110 °C and 85 mbar (a) for 1 hour, and then 27.5 g of neopentyl glycol, 19.9 g of 2,2-bis(hydroxymethyl)propionic acid, 0.9 g of butyl glycol and 2.7 g of trimethylolpropane were further added. The mixture was dissolved in 240.4 g of acetone before 111.2 g of Desmodur^{®} I and 48.5 g of Desmodur^{®} W were added at 35 °C. The resulting mixture was stirred at acetone reflux condition until the isocyanate content of 2.3% by weight was reached. Then the mixture was cooled to 40 °C before 13.2 g of 2-dimethylaminoethanol was added. The resulting mixture was added to pre-weighted 594 g of water under stirring. The water temperature was 23.6 °C. A solution of 8.3 g of ethylenediamine in 80.4 g of water was added to the mixture in 5 min. Then acetone was removed by distillation. The obtained PUD has features as below:
Solid content: 30.42% by weight
Average particle size: 33.2 nm
D(i)90: 52.7 nm
Viscosity: 474 mPa s

### Example 2

261 g of Desmophen^{®} C 1200 was dehydrated at 110 °C and 85 mbar (a) for 1 hour, and then 10.6 g of neopentyl glycol, 34.4 g of 2,2-bis(hydroxymethyl)propionic acid and 0.9 g of butyl glycol were further added. The mixture was dissolved in 154 g of acetone before 107.6 g of Desmodur^{®} I and 46.9 g of Desmodur^{®} W were added at 42 °C. The resulting mixture was stirred at acetone reflux condition until the isocyanate content of 2.3% by weight was reached. Then the mixture was cooled to 40 °C before 24.8 g of diisopropylethylamine was added. The resulting mixture was added to pre-weighted 765 g of water under stirring. The water temperature was 9 °C. A solution of 2.0 g of DETA, 4.2 g of ethylenediamine and 1.1 g of butylamine in 105.5 g of water was added to the mixture in 5 min. Then acetone was removed by distillation. The obtained PUD has features as below:
Solid content: 37.33% by weight
Average particle size: 44.0 nm
D(i)90: 88.3 nm
Viscosity: 112 mPa·s

### Comparative Example 3

280 g of Desmophen^{®} C 2202 and 16.0 g of polyether LB 25 were dehydrated at 110 °C and 85 mbar (a) for 1 hour, and then 13.7 g of 2,2-bis(hydroxymethyl)propionic acid was further added. The mixture was cooled while stirred. 72.2 g of Desmodur^{®} I and 17.2 g of Desmodur^{®} W were added at 60 °C. The resulting mixture was stirred at 90 to 100 °C until the isocyanate content of 3.0% by weight was reached. Then the mixture was dissolved in 709 g of acetone and cooled to 50 °C to produce a reaction solution. 10.1 g of triethylamine was added. A solution of 3.5 g of hydrazine hydrate and 3.4 g of ethylenediamine in 36 g of water was added to the reaction solution. The resulting mixture was vigorously stirred for 10 minutes, and then 672 g of water was added to disperse the mixture. Then acetone was removed by distillation. The obtained PUD has features as below:
Solid content: 36.34% by weight
Average particle size: 52.5 nm
D(i)90: 77.0 nm
Viscosity: 619 mPa·s

### Comparative Example 4

280 g of Desmophen^{®} C 1200 and 29.2 g of polyether LB 25 were dehydrated at 110 °C and 85 mbar (a) for 1 hour, and then 10.1 g of 2,2-bis(hydroxymethyl)propionic acid was further added. The mixture was cooled while stirred. 72.2 g of Desmodur^{®} I and 17.2 g of Desmodur^{®} W were added at 60 °C. The resulting mixture was stirred at 90 to 100 °C until the isocyanate content of 3.5% by weight was reached. Then the mixture was dissolved in 726 g of acetone and cooled to 50 °C to produce a reaction solution. 7.4 g of triethylamine was added. A solution of 7.5 g of ethylenediamine in 49.4 g of water was added to the reaction solution. The resulting mixture was vigorously stirred for 10 minutes, and then 723 g of water was added to disperse the mixture. Then acetone was removed by distillation. The obtained PUD has features as below:
Solid content: 33.58% by weight
Average particle size: 51.4 nm
D(i)90: 83.7 nm
Viscosity: 9738 mPa s (using spindle S63, 30 rpm)

### Comparative Example 5

162.5 g of Desmophen^{®} C 1200 and 138.1 g of polyester I were dehydrated at 110 °C and 85 mbar (a) for 1 hour, and then 59.6 g of neopentyl glycol, 43.0 g of 2,2-bis(hydroxymethyl)propionic acid, 2.1 g of butyl glycol and 6.0 g of trimethylolpropane were further added. The mixture was dissolved in 505 g of acetone before 240.8 g of Desmodur^{®} I and 105.0 g of Desmodur^{®} W were added at 35 °C. The resulting mixture was stirred at acetone reflux condition until the isocyanate content of 2.4% by weight was reached. Then the mixture was cooled to 40 °C before 28.6 g of 2-dimethylaminoethanol was added. The resulting mixture was added to pre-weighted 1275 g of water under stirring. The water temperature was 50 °C. A solution of 13.2 g of ethylenediamine and 3.5 g of butylamine in 161.7 g of water was added to the mixture in 5 min. Then acetone was removed by distillation. The obtained PUD has features as below:
Solid content: 35.46% by weight
Average particle size: 110.4 nm
D(i)90: 184 nm
Viscosity: 65 mPa s

### Comparative Example 6

200 g of Desmophen^{®} C 1200 and 21.6 g of polyether LB 25 were dehydrated at 110 °C and 85 mbar (a) for 1 hour, and then 24.8 g of 2,2-bis(hydroxymethyl)propionic acid, 6.3 g of trimethylolpropane and 15.8 g of 1,4-butanediol were further added. The mixture was dissolved in 320 g of acetone before 211 g of Desmodur^{®} I was added at 45 °C. The resulting mixture was stirred at acetone reflux condition until the isocyanate content of 4.4% by weight was reached. 16.5 g of 2-dimethylaminoethanol was added. The resulting mixture was added to pre-weighted 733 g of water under stirring. The water temperature was 22.8 °C. A solution of 18.9 g of ethylenediamine in 182.3 g of water was added to the reaction solution. The resulting mixture was vigorously stirred for 20 minutes, and then acetone was removed by distillation. The obtained PUD has features as below:
Solid content: 37.47% by weight
Average particle size: 73.9 nm
D(i)90: 122 nm
Viscosity: 38 mPa s

### Comparative Example 7 (according to Example 3 of US 2006/240264)

152.1 g of Desmodur^{®} W and 348.7 g of Desmodur^{®} I were heated to 55 °C and stirred. Then 62.2 g of dimethylolpropionic acid were added. After 5 minutes a solution of 470.4 g of Desmophen^{®} C 1200, 96.3 g of neopentyl glycol, 2.8 g of butyl glycol and 377.5 g of acetone was added over the course of 20 minutes and the mixture was heated to 68 °C. It was stirred at this temperature until an NCO content of 2.8% was reached. Thereafterit was cooled to 60 °C. and 46.9 g of triethylamine were added. 450 g of this solution were dispersed with vigorous stirring in 545. 9 g of water, which had been introduced at a temperature of 35 °C. Dispersion was followed by stirring for 5 minutes. Subsequently, over the course of 10 minutes, a solution of 2.0 g of diethylenetriamine, 1.1 g of n-butylamine and 3.5 g of ethylenediamine in 60.7 g of water was added. After it had all been added, the mixture was stirred at 40 °C. for 20 minutes, before the acetone was removed by vacuum distillation at this temperature. The obtained PUD has features as below:
Solid content: 36.47% by weight
Average particle size: 34.3 nm
D(i)90: 58.5 nm
Viscosity: 74 mPa·s

### Test methods

Hydroxyl (OH) value: The hydroxyl (OH) value of the resin means the number of milligrams (mg) of potassium hydroxide equivalent to the hydroxyl groups in 1 g of the polyol. The hydroxyl value is a value measured in accordance with the indicator titration method of Method B of JIS K 1557:2007.

Molecular weight: For measuring the number-average molecular weight and the weight-average molecular weight of polyol or the polyurethane, a gel permeation chromatography is used. The polyol is weighted and dissolved in tetrahydrofuran at a concentration of 8 mg/mL. The aqueous polyurethane dispersion is coated on a polytetrafluoroethylene plate, and the coated plate is naturally dried at room temperature to obtain a dry film. An appropriate amount of dry film is weighed and dissolved in tetrahydrofuran at a concentration of 8 mg/mL. A test is performed with Agilent 1260 (column temperature = 35 °C, injection volume = 60 µL, flow rate = 0.7 mL/min). The test result is obtained based on the polystyrene standard as control, and the fractions having molecular weights of 100 or higher are selected for the calculation.

Transmittance [%]: 3 mL PUD was filled in polystyrene cuvette. Transmittance of the sample was tested using a UV-2600 UV-VIS sepctrophotometer (SHIMADZU, Japan) at 24±1 °C, wavelength range: 420 to 700 nm, scan speed: fast, scan mode: single, slit width: 5.0, accumulation time: 0.1 sec, detector unit: direct.

Average particle size and D(i)90 [nm]: 1 drop (about 0.05 g) PUD was added to 50 mL ultrapure water. Diluted sample was tested by Malvern Zetasizer Nano ZS particle analyser at 23.0±0.1 °C. Material: polystyrene latex (RI: 1.590; Absorption: 0.010), dispersant: water (temperature: 23.0 °C; viscosity: 0.9308 cP; RI: 1.330), equilibration time: 60 seconds, cell type: Disposable cuvettes DTS0012, positioning method: automatic attenuation selection, seek for optimum position: yes, analysis model: general purpose (normal resolution), measurement angel: 173° Backscatter (NIBS default), number of runs: 3, run duration: 10 seconds, number of measurements: 10.

Average particle size refers to Z-Average size used in dynamic light scattering defined in ISO 13321:1996.

D(i)90 signifies the point in the size distribution, up to and including which, 90% of the total intensity of material in the sample is 'contained'.

Viscosity [mPa·s]: 150 g PUD was filled in glass bottle. Viscosity of sample was tested by Brookfield DV-II+ Pro viscometer at room temperature (20 to 25 °C), using spindle S62 (unless specifically mentioned) at rotation speed 30 rpm according to ISO 3219:1994.

Solid content [% by weight]: about 1 g PUD was spread on glassfiber filter on top of an aluminum sample pan. Solid content was tested by Metteler Teredo Halogen Moisture Analyzer Excellence HS153. Drying program: standard, drying temperature: 120 °C, switch-off criterion: 5 (1 mg /140 seconds) (keep heating sample at 120 °C and keep weighing, if weight loss in 140 seconds is less than 1 mg, stop testing and record rest weight percentage as result.).

Wet colour matching: 13 g Iron oxide yellow paste (commercially available from Axalta Coating System) is well mixed into 87 g of the respective PUD (done with PUD according to example 1, comparative example 4, comparative example 6 and comparative example 7).

13 g Iron oxide red paste (commercially available from Axalta Coating System) is well mixed into 87 g of the respective PUD (done with PUD according to example 2, comparative example 3 and comparative example 5).

The obtained formulation is then coated on glass plate by coiled rod, wet film thickness is 120 µm. The wet film is dried at room temperature for 24 hours. Colour difference of the dried film and freshly coated wet film is evaluated visually, possible ratings are excellent, medium and poor. Smaller colour difference means better wet colour matching performance.

The odour assessment of the polyurethane dispersions is carried out by means of electronic nose as follows:
1. cut aluminum foil into a rectangle of 30 cm * 21 cm;
2. coat a PUD on the matte side of the aluminum foil with 40 µm film maker;
3. heat aluminum foil coated with PUD sample in a 130 °C oven for 3 minutes;
4. cut the dried sample into rectangles by a press-cutter, each test specimen has a dimension of 10 cm * 5 cm;
5. store the test specimens in a sealed plastic bag for 24 hours;
6. place 4 specimens (each 10 cm * 5 cm) in a 1 L glass bottle which has been pre-heated at 80 °C for 30 minutes;
7. heat the sealed glass bottle at 80 °C for 2 hours;
8. take out the glass bottle and leave it at room temperature for 2 minutes;
9. test odour of the sample with Cosmos XP-329IIIR (New Cosmos Electric (Shanghai) Co., Ltd.) under "Batch Mode": insert probe into the glass bottle immediately after open its cover, measure and record the value number;
10. higher value indicates stronger odour of the tested sample.

The experimental results are shown in table 1.

**Table 1**

| **Example No.** | **Wet color matching** | **Average Transmittance @ 420 to 700 nm [%]** | **Average Particle size [nm]** | **D(i)90 [nm]** | **Viscosity [mPa·s]** | **Solid content [% by weight]** | **Odour value** |
|---|---|---|---|---|---|---|---|
| **1** | Excellent | 81.49 | 33.2 | 52.7 | 474 | 30.42 | 273/221 |
| **2** | Excellent | 74.05 | 44.0 | 88.3 | 112 | 37.33 | 651/598 |
| **C3** | Excellent | 63.57 | 52.5 | 77 | 619 | 36.34 | 863/795 |
| **C4** | Medium | 7.58 | 51.4 | 83.7 | 9738 | 33.58 | - |
| **C5** | Poor | 1.55 | 110.4 | 184 | 65 | 35.46 | 452/501 |
| **C6** | Poor | 5.13 | 73.9 | 122 | 38 | 37.47 | 616/577 |
| **C7** | Excellent | 73.30 | 34.3 | 58.5 | 74 | 36.47 | >1600/>1600 |

| | | | | | | | |
|---|---|---|---|---|---|---|---|
| C Comparative | | | | | | | |

It is obvious that only examples 1 and 2 according to the invention are meeting the requirements of wet color matching, low average particle size at acceptable solid content (>30%) and viscosity (<1000 mPas) combined with low odourous emissions. Comparative examples fail to meet the requirements either in wet color matching or in odourous emissions or both.

## Claims

1. An aqueous dispersion comprising at least one polyurethane, wherein the at least one polyurethane is prepared from at least the following components:
(A) at least one polyisocyanate,
(B) at least one polymeric polyol having a number average molecular weight of 400 to 6000 g/mol, wherein at least one polycarbonate polyol is present in the polymeric polyol component (B) in an amount of 55 to 100% by weight, based on total weight of component (B),
(C) optionally at least one monofunctional nonionic hydrophilizing agent,
(D) at least one compound selected from the group consisting of monools, diols, polyols, aminopolyols, monoamines, diamines, polyamines and mixtures thereof, in each case having a number average molecular weight of less than 400 g/mol,
(E) at least one compound selected from the group consisting of monools, diols, polyols, monoamines, diamines, polyamines and mixtures thereof, in each case having at least one salt group, preferably an anionic group, or a functional group that can be converted into a salt group, preferably into a anionic group,
(F) at least a neutralizer selected from the group consisting of tertiary amine compounds with boiling point above 100 °C at atmospheric pressure, inorganic alkali, preferably potassium hydroxide, sodium hydroxide, and mixtures thereof,
**characterized in that** the at least one polyurethane dispersion has an average particle diameter D(i)90 of less than or equal to 100 nm.

2. Dispersion according to claim 1, wherein the at least one polyisocyanate (A) is selected from the group consisting of hexamethylene diisocyanate (HDI), 1-isocyanato-3,3,5-trimethyl-5-isocyanatomethylcyclohexane (IPDI, isophorone diisocyanate), 4,4'-diisocyanatodicyclohexylmethane and mixtures thereof.

3. Dispersion according to claim 1 or 2, wherein the component (A) is a mixture of 1-isocyanato-3,3,5-trimethyl-5- isocyanatomethylcyclohexane (IPDI, isophorone diisocyanate) and 4,4'-diisocyanatodicyclohexylmethane.

4. Dispersion according to any of claims 1 to 3, wherein the at least one polymeric polyol (B) is selected from the group consisting of polycarbonate polyols, polyester polyols, polyether polyols, polycarbonate polycaprolactone polyols and mixtures thereof.

5. Dispersion according to any of claims 1 to 4, wherein the viscosity of said dispersion is 50 to 1500 mPas.

6. Dispersion according to any of claims 1 to 5, wherein the solid content of said dispersion is 20 to 60% by weight.

7. Process for the preparation of the polyurethane dispersion according to any of claims 1 to 6, at least comprising the following steps:
a. Charging a reaction vessel with at least one polymeric polyol (B) and optionally monofunctional nonionic hydrophilizing agent (C), optionally removing contained water below 0.2% by weight, preferably below 0.1% by weight, of the precharged mixture by increasing temperature and/or reducing pressure and/or purging with nitrogen under agitation,
b. Charging a reaction vessel with part of or all amount of component (D) and/or part or all amount of component (E),
c. Reacting the precharged contents of the reaction vessel by dosing the mixture at least comprising at least one polyisocyanate (A), for example at a temperature of 60 to 135 °C and reacting the mixture at the a temperature of 60 to 135 °C temperature to obtain a prepolymer,
d. Before or after step c, adding a solvent that is miscible with water but inert to the isocyanate group to dissolve the prepolymer from step c,
e. Reacting the prepolymer with the parts of component (D) and component (E) which have not been already added in step b, for example at a temperature of 30 to 60 °C, to obtain the polyurethane or polyurethane-urea,
f. Before or after step d or e, adding at least one neutralizer, and
g. Before, during or after step e, adding water to obtain the aqueous polyurethane-urea dispersion,
h. Removing solvent, preferably by distillation.

8. Coating formulation comprising at least one aqueous dispersion according to any of claims 1 to 6.

9. Process for the production of the coating formulation according to claim 8 by mixing the aqueous polyurethane dispersion according to any of claims 1 to 6 with suitable resins and additives, further adding the aqueous medium, and adjusting the viscosity.

10. Use of the aqueous dispersion according to any of claims 1 to 6 in a coating formulation.

11. Process for the coating of a substrate, wherein a coating formulation comprising the aqueous dispersion according to any of claims 1 to 6 is used.

12. Use of a coating formulation according to claim 8 for coating of a substrate.

13. Substrate coated with a coating formulation according to claim 8.
